# EUROPEAN PATENT APPLICATION

(11) **EP 4 610 035 A1**
(43) Date of publication of application: **03.09.2025**
(21) Application number: 24159983.6
(22) Date of filing: 27.02.2024
(51) Int. Cl.: B29C 73/10, B29C 73/30, B29C 70/44, F03D 1/06

(54) **METHOD AND CLAMPING DEVICE FOR MANUFACTURING AND/OR REPAIRING A WIND TURBINE BLADE**

(71) Applicant: Siemens Gamesa Renewable Energy A/S, 7330 Brande (DK)
(72) Inventor: Boergesen, Mogens, 9200 Aalborg SV (DK); Rosa de Oliveira, Carlos Henrique Silva, 9220 Aalborg Øst (DK)
(74) Representative: SGRE-Association

(57) **Abstract**

A method for manufacturing and/or repairing a wind turbine blade (3), comprising
a) providing at least one pre-casted blade component (8, 9, 19),
b) arranging a fiber lay-up (10, 24) in a processing region (14) of the at least one pre-casted blade component,
c) arranging a vacuum bag (25) to cover the processing region,
d) arranging a flexible clamping device (11) to cover the processing region such that the clamping device adjusts its shape (16) at least partially to an outer shape (17, 18) of the at least one pre-casted blade component,
e) applying vacuum to a space (43) covered by the vacuum bag, and
f) infusing resin (13) into the space and curing the resin to form, in the cured state, a joint between the at least one pre-casted blade component and the fiber lay-up.

The clamping device provides a reference surface for casting.

## Description

The present invention relates to a method and a clamping device for manufacturing and/or repairing a wind turbine blade.

Most modern wind turbine blades are made from fiber-reinforced resin. During manufacture, composite materials such as glass fibers are infused with a resin and the resin is cured. For casting the blades or blade components, molds are used as a fixed reference geometry. If any re-casting process of the blade or blade components is required after casting and demolding the blade or blade components, rearranging the blade or blade component in a/the mold is difficult.

It is one object of the present invention to improve manufacturing and/or repairing a wind turbine blade.

According to a first aspect, a method for manufacturing and/or repairing a wind turbine blade is provided. The method comprises the steps:
a) providing at least one pre-casted blade component,
b) arranging a fiber lay-up in a processing region of the at least one pre-casted blade component,
c) arranging a vacuum bag to cover the processing region,
d) arranging a flexible clamping device to cover the processing region such that the clamping device adjusts its shape at least partially to an outer shape of the at least one pre-casted blade component,
e) applying vacuum to a space covered by the vacuum bag, and
f) infusing resin into the space and curing the resin to form, in the cured state, a joint between the at least one pre-casted blade component and the fiber lay-up.

The clamping device provides a reference surface (i.e. casting surface) for casting the fiber lay-up in the processing region and joining it with the at least one pre-casted blade component. The method can, in particular, be used for processing the at least one pre-casted blade component in a further casting process. The further casting process is, for example, a process for joining two pre-casted blade sections with each other by a laminate joint. The further casting process may, for example, also be a process for repairing the at least one pre-casted blade component, e.g., filling a hole and/or indent in a shell of the at least one pre-casted blade component.

The clamping device is flexible such that its shape can be adjusted to an outer shape of the at least one pre-casted blade component. In particular, the clamping device provides flexibility for adjusting its shape and, once shaped and the shape being fixed/secured, the clamping device provides rigidity for providing the casting surface.

The wind turbine blade is part of a rotor of a wind turbine. The wind turbine is an apparatus to convert the wind's kinetic energy into electrical energy. The wind turbine comprises, for example, the rotor having one or more of the blades connected each to a hub, a nacelle including a generator, and a tower holding, at its top end, the nacelle. The tower of the wind turbine is connected to a foundation of the wind turbine, such as a monopile or tripod in the seabed, a floating foundation or a concrete foundation.

The wind turbine blade, e.g., its root section, is fixedly or rotatably connected to the hub. Apart from a (cylindrical) root section, the wind turbine blade is formed aerodynamically. The wind turbine blade comprises, for example, a pressure side (up-wind side) and a suction side (downwind side). The pressure side and the suction side are connected with each other at a leading edge and a trailing edge. The pressure and suction sides and the leading and trailing edges define an airfoil of the wind turbine blade.

The at least one pre-casted blade component has, for example, a fiber-reinforced laminate structure. The at least one pre-casted blade component is, for example, manufactured by arranging a fiber lay-up in a mold, infusing the fiber lay-up with resin, and curing the resin.

The at least one pre-casted blade component is, for example, at least one pre-casted blade section or an entire blade.

The processing region of the at least one pre-casted blade component is, for example, a connection region and/or a repair region of the at least one pre-casted blade component.

The processing region of the at least one pre-casted blade component is, in particular, a region of a shell of the at least one pre-casted blade component.

The shell may include a composite laminate. The shell may in addition include a core material such as wood, balsa and/or a foamed material (e.g., PET foam). The shell may, for example, include a sandwich structure with the core material sandwiched between layers of fiber-reinforced plastic material.

The fiber lay-up arranged in the processing region includes, for example, fibers in a dry condition (i.e. without any resin), semi-dry fibers and/or pre-impregnated fibers (prepreg). Additionally, a core material may be arranged in the processing region.

The fiber lay-up includes, for example, glass fibers, carbon fibers, aramid fibers and/or natural fibers.

The vacuum bag (first vacuum bag) is, for example, arranged such that it covers the fiber lay-up arranged in the processing region entirely. Further, there may also be used more than one vacuum bag (more than one first vacuum bag) to cover the processing region.

The clamping device is, in particular, arranged after the vacuum bag (first vacuum bag) has been arranged. In other words, the clamping device is arranged on (e.g., on top of) the vacuum bag (first vacuum bag). This also means that the clamping device is arranged outside of the space (first space, first vacuum chamber) covered by the vacuum bag (first vacuum bag).

The clamping device is arranged such that its shape is adjusted at least partially to the outer shape of the at least one pre-cast blade component in the processing region.

The shape of the clamping device is, in particular, a geometric shape of the clamping device. By adjusting the shape of the clamping device, the casting surface provided by the clamping device is adjusted and set.

Adjusting the shape of the clamping device to the outer surface of the at least one pre-casted blade component means, in particular, that an inner surface of the clamping device (becoming the casting surface) is shaped to match the outer surface (e.g., outer shell surface) of the at least one pre-casted blade component. Adjusting the shape of the clamping device to the outer surface of the at least one pre-casted blade component may, for example, include that the clamping device covers a gap between two blade sections to be joined with each other and/or that the clamping device covers a defect region of the shell of the at least one pre-casted blade component.

The resin is infused in step f) in a vacuum-assisted manner such that it wets the (e.g., entire) fiber lay-up arranged in the processing region.

The resin includes, for example, thermosets, thermoplastics, epoxy, two-component epoxy, polyurethane, vinyl ester and/or polyester.

The resin is, for example, cured by applying heat at the clamping device.

In the cured state of the resin, the joint between the at least one pre-casted blade component and the fiber lay-up is, in particular, a laminate joint.

According to an embodiment, the vacuum bag arranged to cover the processing region is a first vacuum bag covering a first space. Further, a second vacuum bag is arranged to cover the clamping device, the second vacuum bag covering a second space. Then, vacuum is applied to the second space before the resin is infused.

Having the second vacuum bag, a separate vacuum can be generated in a second space (second vacuum chamber), the second space accommodating the clamping device. Thus, by the vacuum in the second space, a pressure is acting on the clamping device towards the processing region of the at least one pre-casted blade component. In other words, the clamping device is pressed against the at least one pre-casted blade component. Therefore, a casting surface can be better provided by the clamping device. In particular, the casting surface is provided by the clamping device once the clamping device has adjusted its shape at least partially to the outer shape of the at least one pre-casted blade component.

According to a further embodiment,
vacuum is generated in the first space and the second space simultaneously, and/or
vacuum is built up in the first space and the second space alternatingly and incrementally.

Therefore, it can be avoided that vacuum is generated in one of the first and second spaces fully, whereas the other one of the first and second spaces is still at atmospheric pressure.

For example, firstly vacuum is built up in the first space (first vacuum chamber) partially. Then vacuum is built up in the second space (second vacuum chamber) fully. Next, vacuum is built up in the first space fully.

According to a further embodiment,
the at least one pre-casted blade component includes at least two blade sections, the processing region includes a connection region of the at least two blade sections, and by infusing and curing the resin the at least two blade sections are joined with each other, and/or
the at least one pre-casted blade component includes at least one blade section having at least one shell defect, the processing region includes a defect region of the at least one shell defect, and by infusing and curing the resin the at least one shell defect is repaired.

The at least two blade sections are, for example, at least two lengthwise blade sections dividing the blade in a lengthwise direction of the blade. The at least two blade sections include, for example, an inboard section, an outboard section, a root section, a tip section and/or an intermediate section.

The at least one shell defect includes, for example, at least one hole, recess and/or indent in the shell. In case of repairing at least one shell defect, the fiber lay-up is, for example, arranged such that it covers and/or fills the at least one shell defect.

In embodiments, after adjusting the shape of the clamping device to the outer shape of the at least one pre-casted blade component at least partially, the set shape of the clamping device is fixed.

According to a further embodiment, the clamping device is fastened to the at least one pre-casted blade component such that its adjusted shape is fixed.

By fastening the clamping device to the at least one pre-casted blade component, the set shape of the clamping device remains fixed and secured.

Fastening the clamping device to the at least one pre-casted blade component includes, for example, buckling up and/or clasping the clamping device to the and/or around the at least one pre-casted blade component.

The clamping device includes, for example, one or more fastening units and/or clasping units.

For example, a first end of the clamping device is attached to a second end of the clamping device such that the clamping device forms a closed loop around the at least one pre-casted blade component.

According to a further embodiment, the clamping device comprises multiple rigid rib elements and multiple links connecting the multiple rib elements moveably with each other such that each of two adjacent rib elements are connected with each other moveably by at least one link.

The rib elements are, in particular, rigid and non-flexible. The rib elements are made of a rigid material such as wood, a laminate or another rigid material.

By having the links, the rib elements can be moved relative to each other. Said links are, in particular, providing the flexibility of the clamping device.

In particular, each of two adjacent rib elements of the multiple rib elements are connected with each other moveably by at least one link.

For example, each of two adjacent rib elements are connected with each other pivotably by the at least one link. Hence, the rib elements can be rotated relative to each other, e.g., tilted and/or inclined relative to each other. In other words, an inclination angle between each of two adjacent rib elements can be changed for adjusting the shape of the clamping device.

According to a further embodiment,
each of the multiple links is configured for inclining two respective adjacent rib elements relative to each other, and/or
one, some or all of the multiple links are configured for adjusting a distance between two respective adjacent rib elements.

In particular, the multiple links for inclining the two respective adjacent rib elements relative to each other are configured for decreasing an inclination angle between the two respective adjacent rib elements at the casting surface of the clamping device. In other words, the clamping device can adjust its shape such that its casting surface is concavely and/or convexly shaped and matches respectively a convexly and/or concavely shaped outer surface of the at least one pre-casted blade component.

Having multiple links which are configured for adjusting the distance between two respective adjacent rib elements, the shape of the clamping device can be even better adjusted to the outer shape of the at least one pre-casted blade component.

Each of the multiple links configured for adjusting the distance between two respective adjacent rib elements comprises, for example, a hinge with an elongated hole in which a hinge pin is inserted.

In embodiments, between each of two adjacent rib elements of the multiple rib elements an elastic element is sandwiched. The elastic element is compressible such that a dimension of the elastic element can be changed. A material of the elastic element comprises, for example, neoprene, foam and/or a foam resistant to temperature.

According to a further embodiment, the clamping device comprises a fabric to which the multiple rib elements are attached such that each of two adjacent rib elements are spaced apart from each other and a portion of the fabric arranged between the two adjacent rib elements forms a respective one of the multiple links.

The fabric is, for example, a woven fabric, a cloth and/or a woven cloth.

A material of the fabric includes for example, polyester, nylon, cotton and/or glass.

The rib elements are, for example, attached to the fabric by means of an adhesive and or by fastening means such as staples or the like.

The clamping device may optionally also include one or more layers of flexibles mats (e.g., felts) attached to one or both surfaces of the fabric. This allows to smoothen and/or soften one or both surfaces of the fabric. For example, in case of an attachment of the rib elements to the fabric by staples, the staples could be covered by the flexible mat.

According to a further embodiment, the multiple links comprise multiple hinges.

The hinges are, in particular, pin joints each having a hole and a hinge pin, wherein the hinge pin is inserted into the hole and can rotate in the hole.

According to a further embodiment, one, some or all of the multiple hinges have an elongated hole in which a respective hinge pin is arranged for adjusting a distance between two respective adjacent rib elements.

Each elongated hole is, in particular, elongated in a direction perpendicular to a longitudinal direction of the respective hinge pin.

Thus, the hinges with the elongated holes allow rotation around the hinge pin (as rotation axis) as well as moving the hinge pin in the direction in which the elongated hole is elongated (i.e. perpendicular to the rotation axis defined by the hinge pin). Therefore, the hinges with the elongated holes provide two degrees of freedom for the movement of two adjacent rib elements connected to each other by such a hinge.

One, some or all of the multiple hinges may also have a circular (non-elongated) hole in which a respective hinge pin is arranged. In this case, the hinges allow only a rotational movement around the hinge pin and, thus, provide only one degree of freedom for the movement of two adjacent rib elements connected to each other by such a hinge.

According to a further embodiment, the clamping device is arranged to cover the processing region such that a longitudinal direction of each of the multiple rib elements is essentially parallel to a longitudinal direction of the at least one pre-casted blade component.

For example, when the at least one pre-casted blade component is a lengthwise blade section or an entire blade, then the clamping device can be easily arranged around a circumference of the lengthwise blade section or an entire blade.

That the longitudinal direction of each of the multiple rib elements is essentially parallel to the longitudinal direction of the at least one pre-casted blade component includes that an angle between the longitudinal direction of a respective rib element and the longitudinal direction of the at least one pre-casted blade component is 30 degrees or smaller, 20 degrees or smaller, 10 degrees or smaller and/or 5 degrees or smaller.

According to a further embodiment, the clamping device comprises:
one or more heating blankets configured for heating the resin, and/or
one or more insulation layers for thermally insulating the space covered by the vacuum bag.

The one or more heating blankets are, for example, configured for heating the infused resin (e.g., during and/or after infusion) and/or heating resin which is part of a pre-impregnated fiber lay-up arranged in the processing region.

By having the one or more heating blankets and heating the infused resin, a resin flow can be improved (smaller viscosity of the resin). Further, by heating the infused resin and/or the resin integral to the pre-impregnated fiber lay-up, a curing process of the resin can be improved and accelerated or even activated.

By having the one or more insulation layers, the space covered by the vacuum bag (first space covered by first vacuum bag) can be thermally isolated. This allows to better control a temperature of the resin and thus, of the resin flow and/or curing process.

The one or more heating blankets are, for example, arranged at the casting surface of the clamping device (i.e. adjacent to the rib elements). The one or more heating blankets are, for example, configured for being actively thermally controlled. The one or more heating blankets include, for example, one or more electric heat blankets with thermocouples.

The one or more insulation layers are, for example, also arranged at the casting surface of the clamping device.

In use, the one or more heating blankets are, for example, arranged between the casting surface of the clamping device and the vacuum bag (first vacuum bag). In case that one or more insulation layers are provided, they are, for example, arranged between the casting surface and the one or more heating blankets.

According to a further embodiment, the clamping device comprises one or more flexibles mats configured for smoothen and/or soften a casting surface of the clamping device, the casting surface being configured for physical contact, via the vacuum bag, with the fiber lay-up and/or the resin.

The flexible mats comprise, for example, a flexible material and/or an elastic material. A material of the flexible mats comprises, for example, neoprene, foam and/or a foam resistant to temperature.

According to a further embodiment, the one or more flexibles mats include one or more compressible foam mats.

In embodiments, the one or more flexibles mats are air permeable. Exemplarily, the one or more flexibles mats comprise multiple small holes for providing a better air permeability. Hence, generation of a vacuum in the second space (second vacuum chamber) is simplified.

The one or more flexibles mats are, for example, air permeable. Exemplarily, the one or more flexibles mats comprise multiple small holes for providing a better air permeability. Hence, generation of a vacuum in the second space (second vacuum chamber) is simplified.

According to a second aspect, a clamping device for manufacturing and/or repairing a wind turbine blade is provided. The clamping device is configured to be arranged such that it covers a processing region of at least one pre-casted blade component and provides a casting surface for joining the at least one pre-casted blade component and a fiber lay-up by vacuum-assisted resin infusion and curing. Furthermore, the clamping device is flexible and configured for at least partially adjusting its shape to an outer shape of the at least one pre-casted blade component.

The embodiments and features described with reference to the method of the present invention apply, mutatis mutandis, to the clamping device of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows two pre-casted blade components of a blade of the wind turbine of Fig. 1 according to an embodiment;
Fig. 3 shows a view similar as Fig. 2 along with a clamping device according to an embodiment;
Fig. 3A shows, in a top view, embodiments of rib elements of the clamping device of Fig. 3;
Fig. 4 shows a view similar as Fig. 3 but with the clamping device being fastened to the pre-casted blade components;
Fig. 5 shows a cross-section view of a pre-casted blade component according to a further embodiment, the cross section taken along a longitudinal direction of the pre-casted blade component;
Fig. 6 shows a cross-section view of a clamping device according to an embodiment, the cross section taken perpendicular to a longitudinal direction of rib elements of the clamping device;
Fig. 7 shows a cross-section view of a clamping device according to a another embodiment;
Fig. 8 shows a cross-section view of a clamping device according to another embodiment; and
Fig. 9 shows a flowchart illustrating a method for manufacturing and/or repairing a wind turbine blade according to an embodiment.

In the Figures, like reference numerals designate like or functionally equivalent elements, unless otherwise indicated.

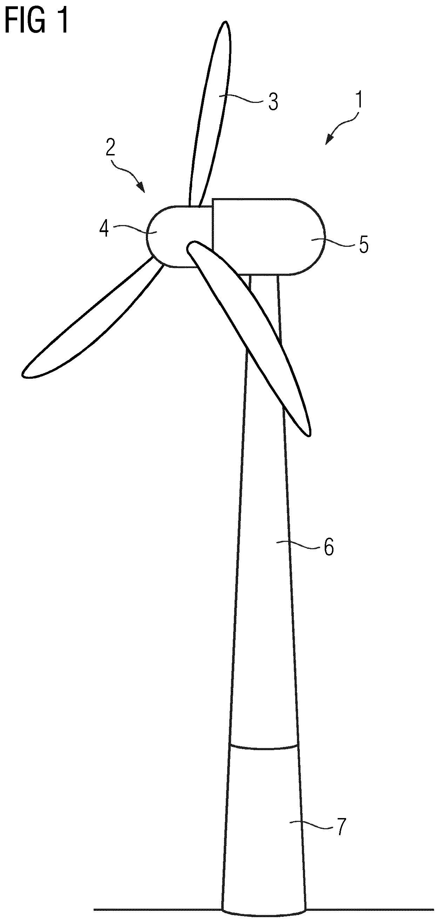

Fig. 1 shows a wind turbine 1 according to an embodiment. The wind turbine 1 comprises a rotor 2 having one or more blades 3 connected to a hub 4. The hub 4 is connected to a generator (not shown) arranged at a nacelle 5. During operation of the wind turbine 1, the blades 3 are driven by wind to rotate and the wind's kinetic energy is converted into electrical energy by the generator at the nacelle 5. The nacelle 5 is arranged at the upper end of a tower 6 of the wind turbine 1. The tower 6 is erected on a foundation 7 such as a monopile or concrete foundation. The foundation 7 is connected to and/or driven into the ground or seabed.

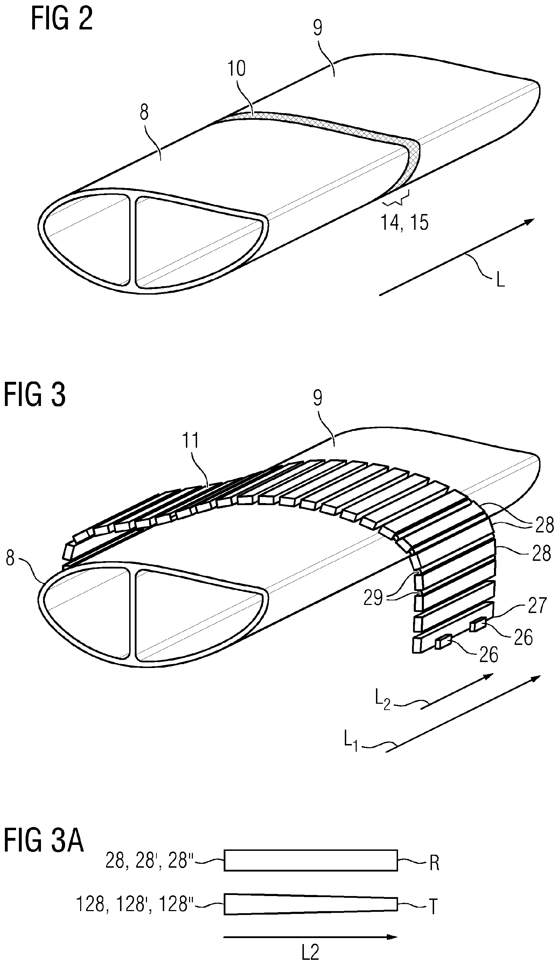

In the following, a method for manufacturing and/or repairing a wind turbine blade 3 of the wind turbine 1 of Fig. 1 is described with reference to Figs. 2 to 7.

In a first step S1 of the method, at least one pre-casted blade component 8, 9 is provided, as shown in Figs. 2 to 4.

In the example of Figs. 2 to 4, two pre-casted blade components 8, 9 are shown which divide the blade 3 (Fig. 1) in a lengthwise direction L1 of the blade 3. In the example of Figs. 2 to 4, the method is carried out for joining the two pre-casted blade components 8, 9 with each other by a laminate joint (fiber lay-up 10 in Fig. 2). That means, in the example of Figs. 2 to 4, the method is carried out for manufacturing a blade 3 by assembling several pre-casted blade sections 8, 9 with each other.

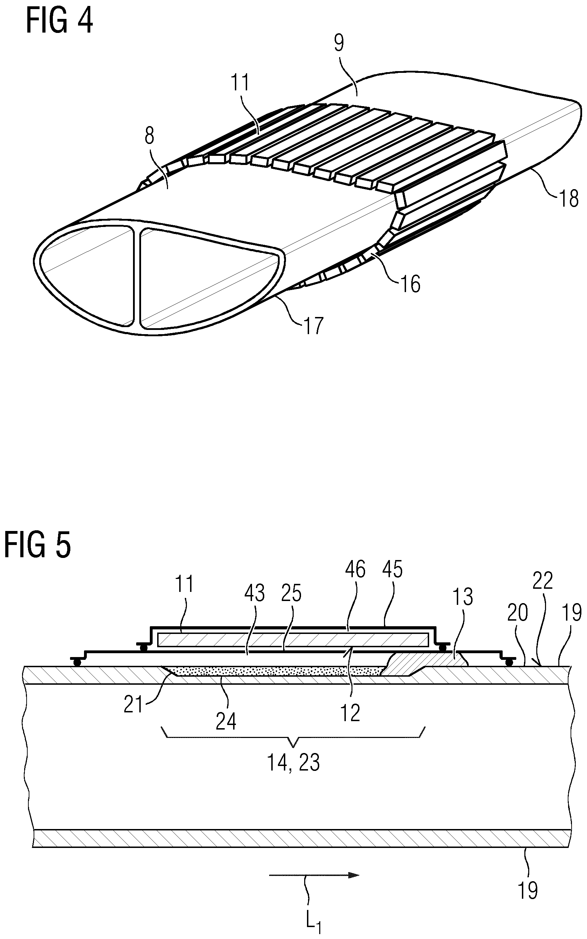

As shown in Fig. 3, a clamping tool 11 is used in the method. The clamping tool 11 provides a reference surface 12 for casting the fiber lay-up 10 into resin 13 (casting surface 12, Fig. 5) in an easy manner without the need for a mold.

The clamping device 11 is configured to be arranged at the at least one pre-casted blade component 8, 9 such that it covers a processing region 14 (Fig. 2) of at least one pre-casted blade component 8, 9. Further, the clamping device 11 is configured to provide the casting surface 12 for joining the at least one pre-casted blade 8, 9 component and the fiber lay-up 10 by vacuum-assisted resin infusion and curing.

In the example of Figs. 2 to 4, the processing region 14 is a connection region 15. Further, the clamping device 11 is configured to provide the casting surface 12 for joining a first pre-casted blade component 8 and a second pre-casted blade component 9 with each other and with the fiber lay-up 10 by vacuum-assisted resin infusion and curing.

Furthermore, the clamping device 11 is flexible and configured for at least partially adjusting its shape 16 to an outer shape 17, 18 of the at least one pre-casted blade component 8, 9. In the example of Figs. 2 to 4, the clamping device 11 is configured for at least partially adjusting its shape 16 to the outer shape 17 of the first pre-casted blade component 8 and to the outer shape 18 of the second pre-casted blade component 9, as can be seen in Fig. 4.

Fig. 5 illustrates an example, in which one pre-casted blade component 19 is provided in step S1. The pre-casted blade component 19 is a lengthwise blade section of the blade 3. The pre-casted blade component 19 includes a shell 20 having a shell defect 21. In the example of Fig. 5, the shell defect 21 is a recess in an outer shell surface 22 of the shell 20. In other examples, a shell defect can also be a hole in the shell 20 or another shell defect.

It is noted that Fig. 5 shows a cross-section view of the pre-casted blade component 19, wherein the cross section is taken along a longitudinal direction L1 of the pre-casted blade component 19.

In Fig. 5, a processing region 14 of the pre-casted blade component 19 is a defect region 23 of the pre-casted blade component 19.

In a second step S2 of the method, a fiber lay-up 10 is arranged in the processing region 14 of the at least one pre-casted blade component 8, 9, 19.

In the example of Figs. 2 to 4, the fiber lay-up 10 is arranged in step S2 in the connection region 15 of the two pre-casted blade components 8, 9.

In the example of Fig. 5, a fiber lay-up 24 is arranged in step S2 in the defect region 23 of the pre-casted blade component 19.

In a third step S3 of the method, a first vacuum bag 25 is arranged to cover the processing region 14. The first vacuum bag 25 is only shown in Fig. 5 but this applies equally to the example of Figs. 2 to 4.

In a fourth step S4 of the method, the flexible clamping device 11 is arranged to cover the processing region 14 such that the clamping device 11 adjusts its shape 16 (Fig. 4) at least partially to the outer shape 17, 18 of the at least one pre-casted blade component 8, 9, 19.

In Figs. 2 to 4, the at least one pre-casted blade components 8, 9 and the clamping device 11 are shown in a perspective view. In Fig. 5, the pre-casted blade component and the clamping device 11 are shown in a cross-section view. In particular, the very same clamping device 11 may be used for joining the two pre-casted blade sections 8, 9 (Figs. 2 to 4) and for repairing the pre-casted blade section 19 (Fig. 5). However, also differently configured (e.g., sized) clamping devices 11 may be used for joining the two pre-casted blade sections 8, 9 (Figs. 2 to 4) and for repairing the pre-casted blade section 19 (Fig. 5).

In step S4, the clamping device 11 is - after adjusting its shape 16 to the outer shape 17, 18 of the at least one pre-casted blade component 8, 9, 19 (Fig. 4) - fastened such that the set shape 16 of the clamping device 11 is fixed and secured. Thus, a stable casting surface 12 can be provided by the clamping device 11.

The clamping device 11 is, in particular, fastened to the at least one pre-casted blade component 8, 9, 19 (Figs. 3 and 4). The clamping device 11 is, for example, arranged around the outer surface 17, 18 of the at least one pre-casted component 8, 9 such that it forms a closed circumference (Fig. 4).

The clamping device 11 includes, for example, one or more fastening units 26 and/or clasping units 26 as shown in Fig. 3. Each fastening/clasping unit 26 comprises, for example, two elements which can be engaged with each other, wherein one of the two elements is arranged at a first end 27 of the clamping device 11 (visible in Fig 3) and another one of the two elements is arranged at a second end of the clamping device 11 (not visible in Fig 3).

The flexibility of the clamping device 11 allows to at least partially adjust its shape 16 to the outer shape 17, 18 of the at least one pre-casted blade component 8, 9.

The clamping device 11 comprises, for example, multiple rigid rib elements 28. In Fig. 3, only three rib elements 28 of the multiple rigid rib elements 28 are denoted with a reference sign for illustration purposes. The reference sign L2 denotes a longitudinal direction of the rib elements 28.

Fig. 3A shows, in a top view, embodiments of rib elements 28, 28', 28" and 128, 128', 128" of the clamping device 11 of Fig. 3.

As shown in Fig. 3 and in the upper part of Fig. 3A, any rib element 28, 28', 28" described herein can have, as seen in a top view, a rectangular shape R. Further, as shown only in the lower part of Fig. 3A, any rib element 28, 28', 28" described herein can also have a trapezoidal shape T. Note that in Fig. 3A, reference signs 128, 128', 128" are used for the rib element for clarity. Hence, one, some or all of the herein shown and described rib elements 28, 28', 28", 128, 128', 128" can have, as seen in top view, a rectangular shape R, a shape of a straight parallel prism and/or a shape T of a trapezoidal prism as needed. The trapezoidal shape T of the rigid rib elements 128, 128', 128" will allow the entire shape 16 of the clamping device 11 forming an arc geometry that can cover conical shape section of the at least one pre-casted blade component 8, 9, 19. It is noted that the number, size and dimensions of the rigid rib elements 28, 28', 28", 128, 128', 128" used for assembling the clamping device 11, e.g., also the size and dimensions of the shape R, T , can have any value.

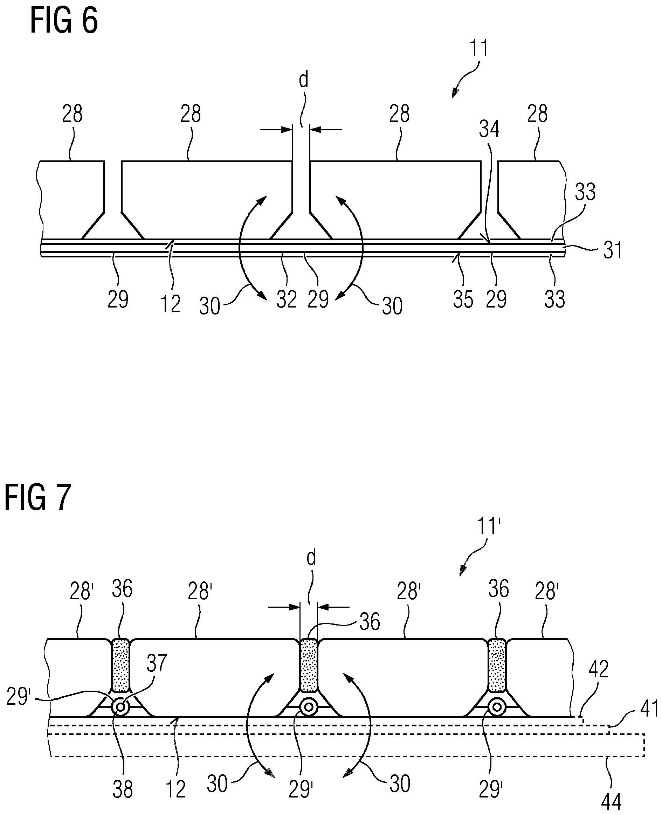

Furthermore, the clamping device 11 comprises, for example, multiple links 29 connecting the multiple rib elements 28 moveably with each other. In particular, each of two adjacent rib elements 28 are connected with each other moveably by at least one link 29, as shown in Fig. 6.

Fig. 6 shows a cross-section view of the clamping device 11, in particular of several rib elements 28 and links 29 of the clamping device 11. The cross section in Fig. 6 is taken perpendicular to the longitudinal direction L2 (Fig. 3) of the rib elements 28. It is further noted that the first vacuum bag 25 not shown in Figs. 6 to 8 would be located at the bottom side of the clamping device 11, 11', 11" in these figures.

Each of the multiple links 29 is configured for inclining two respective adjacent rib elements 28 relative to each other, as indicate by arrows 30 in Fig. 6.

In the example of Fig. 6, the clamping device 11 comprises a fabric 31 to which the multiple rib elements 28 are attached (e.g., adhered and/or stapled). In particular, each of two adjacent rib elements 28 are spaced apart (distance d) from each other such that a portion 32 of the fabric 31 located between the two adjacent rib elements 28 is not covered by any rib element 28. This portion 32 of the fabric 31 forms a respective one of the multiple links 29.

Optionally, the clamping device 11 may include one or more flexibles mats 33 (e.g., felts) attached to one or both surfaces 34, 35 of the fabric 31, as shown in Fig. 6. This allows to smoothen and/or soften one or both surfaces 34, 35 of the fabric 31.

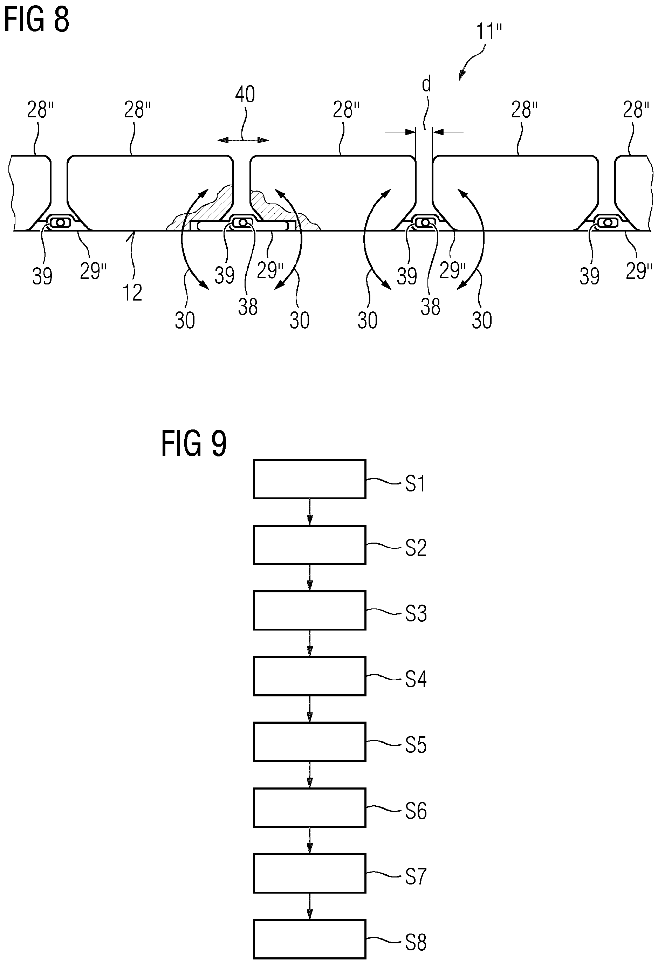

Although not shown in Fig. 6 and Fig. 8 but only shown in Fig. 7, the clamping device 11, 11', 11" may optionally include elastic elements 36 sandwiched between each of two adjacent rib elements 28, 28'. The elastic elements 36 are elastically compressible such that the distance d between each of two adjacent rib elements 28, 28', 28" can be changed.

The multiple links 29' may - instead of by portions 32 of the fabric 31 (Fig. 6) also be provided by multiple hinges 29', as shown in Fig. 7.

The hinges 29' are, in particular pin joints having a hole 37 and a hinge pin 38 inserted into the hole 37. In the example of Fig. 7, the hole 38 is a circular hole. By rotating the pin 37 in the hole 38, the adjacent rib elements 28' attached to the respective hinge 29' can be inclined relative to each other, as indicate by arrows 30 in Fig. 7.

One, some or all of the multiple hinges 29" between the rib elements 28" may also be configured for adjusting the distance d between two respective adjacent rib elements 28", as shown by the arrow 40 in Fig. 8. In particular, in Fig. 8, all shown hinges 29" have an elongated hole 39 in which a respective hinge pin 38 is inserted.

In Fig. 7, several optional elements of the clamping device 11, 11', 11" are shown each of which (similar as the mats 33 in Fig. 6) can be used optionally for each clamping device 11, 11', 11" shown and described herein.

For example, the clamping device 11' (and any other clamping device 11, 11" described herein) may comprise one or more heating blankets 41. The one or more heating blankets 41 are configured for heating the infused resin 13 (Fig. 5) during and/or after infusion and/or - in the case that the fiber lay-up 24 includes a pre-impregnated fiber lay-up - for heating resin which is integral to the pre-impregnated fiber lay-up .

For example, the clamping device 11' (and any other clamping device 11, 11") may comprise one or more insulation layers 42 for thermally insulating a space 43 (Fig. 5) covered by the first vacuum bag 25.

For example, the clamping device 11' (and any other clamping device 11, 11") may comprise one or more flexibles mats 44 configured for smoothen and/or soften the casting surface 12 of the clamping device 11, 11', 11".

At the end of step S4, the shape 16 of the clamping device 11, 11', 11" is adjusted to the outer shape 17, 18 of the at least one pre-casted blade component 8, 9, 19 (Fig. 4) and fastened such that the set shape 16 remains secured.

In a fifth step S5 of the method, a second vacuum bag 45 is arranged to cover the clamping device 11, as shown in Fig. 5. By using the second vacuum bag 45, a second space 46 (second vacuum chamber 46) is provided in which the clamping device 11 is accommodated.

In a sixth step S6 of the method, vacuum is applied to the first space 43 (first vacuum chamber 43) covered by the first vacuum bag 25.

In a seventh step S7 of the method, vacuum is applied to the second space 46 (second vacuum chamber 46).

Steps S6 and S7 are, for example, carried out simultaneously and/or in parallel. That means for example that vacuum is generated in the first space 43 and the second space 46 simultaneously, and/or that vacuum is built up in the first space 43 and the second space 46 alternatingly and incrementally.

For example, firstly vacuum is built up in the first space 43 (first vacuum chamber 43) partially. Then vacuum is built up in the second space 46 (second vacuum chamber 46) fully. Next, vacuum is built up in the first space fully 43.

In an eighth step S8 of the method, resin 13 is infused by the generated vacuum into the first space 43 (first vacuum chamber 43). Then, the resin 13 is cured. In the cured state, a joint between the at least one pre-casted blade component 8, 9, 19 and the fiber lay-up 10 24 is established.

In the example of Figs. 2 to 4, in step S8 the first pre-casted blade component 8 and the second pre-casted blade component 9 are joined with each other and with the fiber lay-up 10 for establishing a laminate joint between the two pre-casted blade components 8, 9.

In the example of Fig. 5, in step S8 the shell defect 21 is repaired by joining the fiber lay-up 24 with the shell 20.

Although the present invention has been described in accordance with preferred embodiments, it is obvious for the person skilled in the art that modifications are possible in all embodiments.

## Claims

1. A method for manufacturing and/or repairing a wind turbine blade (3), comprising
a) providing (S1) at least one pre-casted blade component (8, 9, 19),
b) arranging (S2) a fiber lay-up (10, 24) in a processing region (14) of the at least one pre-casted blade component (8, 9, 19),
c) arranging (S3) a vacuum bag (25) to cover the processing region (14),
d) arranging (S4) a flexible clamping device (11) to cover the processing region (14) such that the clamping device (11) adjusts its shape (16) at least partially to an outer shape (17, 18) of the at least one pre-casted blade component (8, 9, 19),
e) applying (S6) vacuum to a space (43) covered by the vacuum bag (25), and
f) infusing (S8) resin (13) into the space (43) and curing the resin (13) to form, in the cured state, a joint between the at least one pre-casted blade component (8, 9, 19) and the fiber lay-up (10, 24).

2. The method according to claim 1, wherein
the vacuum bag (25) arranged to cover the processing region (14) is a first vacuum bag (25) covering a first space (43),
a second vacuum bag (45) is arranged (S5) to cover the clamping device (11), the second vacuum bag (45) covering a second space (46), and
vacuum is applied (S7) to the second space (46) before the resin (13) is infused.

3. The method according to claim 2, wherein
vacuum is generated in the first space (43) and the second space (46) simultaneously, and/or
vacuum is built up in the first space (43) and the second space (46) alternatingly and incrementally.

4. The method according to one of claims 1 to 3, wherein
the at least one pre-casted blade component (8, 9, 19) includes at least two blade sections (8, 9), the processing region (14) includes a connection region (15) of the at least two blade sections (8, 9), and by infusing and curing the resin (13) the at least two blade sections (8, 9) are joined with each other, and/or
the at least one pre-casted blade component (8, 9, 19) includes at least one blade section (19) having at least one shell defect (21), the processing region (14) includes a defect region (23) of the at least one shell defect (21), and by infusing and curing the resin (13) the at least one shell defect (21) is repaired.

5. The method according to one of claims 1 to 4, wherein the clamping device (11) is fastened to the at least one pre-casted blade component (8, 9, 19) such that its adjusted shape (16) is fixed.

6. The method according to one of claims 1 to 5, wherein the clamping device (11) comprises multiple rigid rib elements (28) and multiple links (29) connecting the multiple rib elements (28) moveably with each other such that each of two adjacent rib elements (28) are connected with each other moveably by at least one link (29).

7. The method according to claim 6, wherein
each of the multiple links (29, 29', 29") is configured for inclining two respective adjacent rib elements (28, 28', 28") relative to each other, and/or
one, some or all of the multiple links (29, 29") are configured for adjusting a distance (d) between two respective adjacent rib elements (28, 28").

8. The method according to claim 6 or 7, wherein the clamping device (11) comprises a fabric (31) to which the multiple rib elements (28) are attached such that each of two adjacent rib elements (28) are spaced apart from each other and a portion (32) of the fabric (31) arranged between the two adjacent rib elements (28) forms a respective one (29) of the multiple links (29).

9. The method according to one of claims 6 to 8, wherein the multiple links (29', 29") comprise multiple hinges (29', 29") .

10. The method according to claim 9, wherein one, some or all of the multiple hinges (29") have an elongated hole (39) in which a respective hinge pin (38) is arranged for adjusting a distance (d) between two respective adjacent rib elements (28") .

11. The method according to one of claims 6 to 10, wherein the clamping device (11) is arranged to cover the processing region (14) such that a longitudinal direction (L2) of each of the multiple rib elements (28) is essentially parallel to a longitudinal direction (L1) of the at least one pre-casted blade component (8, 9, 19).

12. The method according to one of claims 1 to 11, wherein the clamping device (11) comprises
one or more heating blankets (41) configured for heating the resin (13), and/or
one or more insulation layers (42) for thermally insulating the space (43) covered by the vacuum bag (25).

13. The method according to one of claims 1 to 12, wherein the clamping device (11) comprises one or more flexibles mats (33, 44) configured for smoothen and/or soften a casting surface (12) of the clamping device (11), the casting surface (12) being configured for physical contact, via the vacuum bag (25), with the fiber lay-up (10, 24) and/or the resin (13) .

14. The method according to claim 13, wherein the one or more flexibles mats (33, 44) include one or more compressible foam mats (44).

15. A clamping device (11) for manufacturing and/or repairing a wind turbine blade (3), wherein
the clamping device (11) is configured to be arranged such that it covers a processing region (14) of at least one pre-casted blade component (8, 9, 19) and provides a casting surface (12) for joining the at least one pre-casted blade component (8, 9, 19) and a fiber lay-up (10, 24) by resin infusion and/or curing, and
the clamping device (11) is flexible and configured for at least partially adjusting its shape (16) to an outer shape (17, 18) of the at least one pre-casted blade component (8, 9, 19).
